# EUROPEAN PATENT APPLICATION

(11) **EP 1 694 031 A1**
(43) Date of publication of application: **23.08.2006**
(21) Application number: 06300111.9
(22) Date of filing: 06.02.2006
(51) Int. Cl.: H04L 29/06

(54) **Method for performing data transport over a serial bus using internet protocol and apparatus for use in the method**

(30) Priority: 18.02.2005 EP 05090033
(71) Applicant: Thomson Licensing S.A., 92100 Boulogne-Billancourt (FR)
(72) Inventor: Brune, Thomas, 30449 Hannover (DE); Köhler, Ralf, 30455 Hannover (DE); Dorau, Kai, 30559 Hannover (DE)
(74) Representative: Schäferjohann, Volker

(57) **Abstract**

Real time streaming over serial buses (20) using Internet protocol IP is becoming more and more important. With new bus technologies e.g. 10Gbit Ethernet even streaming in HD cinematography quality and uncompressed form becomes possible. In this case, however, data access management by software means is critical or simply not possible for performance reasons even if high performance microcontrollers are used where the software runs.

The invention proposes for an apparatus in a network to implement hardware means (26, 27, 28) for processing the real-time critical data packets as well as software means for processing the real-time uncritical data packets and a filter algorithm respectively a de-multiplexer (25) for analyzing packet header and passing the real-time critical data packets to the hardware means (26, 27, 28) and the real-time uncritical data packets to the software means.

## Description

The invention relates to the field of performing data communication over serial busses using Internet Protocols IP. More specifically it is related to the field of performing real time streaming over serial busses using Internet Protocols.

### Background of the invention

For video streaming over Internet a number of high compression video encoding techniques exist. Such techniques include MPEG2 or MPEG4 video/audio coding. Other techniques are H.263, H.264, DIVX or Windows Media 9, etc. Those techniques allow the compression of a standard video quality stream with 640 * 480 pixels á 8 bits in 3 colour components at 25 Hz = 184 Mbit/s by the factor of 100 or more, so that video streaming over analogue telephone line with DSL modem (Digital Subscriber Line) becomes possible.

At the other end of the video chain, namely at the end of video production most compression techniques are unacceptable even if exclusively redundancy reduction is used. Therefore, much higher data rates must be supported for data communication via bus protocols.

There is one bus standard existing for the field of professional video production called HDSDI (SMPTE 292M) dealing with approximately 1.5 Gbit/s. Also, in future more and more high definition video material will be produced and here much higher data rates are required, e.g. for 2k cinematography film 1920 * 1080 pixels á 10 bits in 3 colour components at 24 frames per second + audio and meta data leads to 1.6 Gbit/s. Beyond that, the 4k film is on the way with 3840 * 2160 resolution. Here the industries have to deal with 6 Gbit/s.

In studios it is therefore highly desirable to build networks of video servers and sinks based on bus technology that provides data transport capacities above 2 Gbit/s. The Ethernet bus technology is specified for these high data rates. There are Ethernet variants existing providing 1 Gbit/s data rate, such as 1000BASE-SX, 1000BASE-LX, 1000BASE-CX and 1000BASE-T. Furthermore there are Ethernet variants specified, that provide 10 Gbit/s data rate based on optical fibre. These are named 10GBASE-LX4, 10GBASE-SR, - LR, -ER, 10GBASE-SW, -LW and -EW.

It is more and more likely that video streaming over Ethernet physical layer will be used for professional video production. And it is very much wanted to use the already installed upper layers like TCP (Transmission Control Protocol)/UDP (User Datagram Protocol)/RTP (Real Time Transport Protocol) and IP (Internet Protocol) for this video streaming as stacks/drivers with these protocol layers are shipped with a lot of different Operating Systems (OS). The advantage is that many software tools 'off the shelf' are supporting the TCP/UDP and IP protocols to retrieve/show or store/record these video streams.

Most of the known applications for video streaming over IP are software based. To achieve kind of real-time streaming the performance of the processor executing the applications has to be very high. The processors interrupt reaction time for processing IP-packets becomes more demanding with increasing Ethernet physics speed level (1000BASET, 10GbitEthernet(10GbE)). For processing IP-packets on 10GbE, today's processors cannot provide the needed performance. Taking the next upper protocol layer into account, especially TCP, the processor does not have enough performance.

### Invention

To solve the above-mentioned problem it is the general idea of the invention for a method for performing data transport over a serial bus using Internet protocols to split up the TCP/UDP/RTP and IP protocol levels for embedded software/hardware architectures and do the real-time streaming not over TCP but over UDP/RTP. The time critical RTP/UDP/IP protocols are in this proposal completely supported by hardware and the not time critical TCP/(UDP)/IP level is implemented by software on an embedded microprocessor. Likewise the invention relates to the idea to split up the protocol levels in case the real-time streaming is done with procedure calls of a file system instead of RTP.

For an apparatus for use in the method according to the invention it is advantageous if said apparatus comprises hardware means for processing the real-time critical data packets, software means for processing the real time uncritical data packets as well as a filter means in conjunction with a demultiplexer for passing the real-time critical data packets to the HW means and the real-time uncritical data packets to the software means.

Further advantageous embodiments are apparent from the respective dependent claims.

If Internet technology is used it is particularly advantageous that the filter algorithm makes the following three decisions:
1. IP data packets are to be processed real-time critical
2. IP data packets are to be processed real-time uncritical
3. IP data packets are to be blocked respectively not to be processed.

Decision criteria for the filtering means result from the analysis of TCP/UDP/IP packet header. The decision may be made dependent on:
1. IP source address of incoming IP data packets
2. IP destination address of incoming IP data packets
3. Entry in 'Protocol'-field of incoming IP data packets
4. Source port number of incoming TCP/UDP data packets
5. Destination port number of incoming TCP/UDP data packets
6. Remote Procedure Call function (Program number and procedure number) of an incoming TCP/UDP data packet.

This way a demultiplexer can be used that passes the data packet to the right processing stage depending on filter decision.

In general the filter decisions: 1.) and 2.) are used to block processing of not foreseen incoming data packets or to acknowledge them real-time uncritical by software in a simple way e.g. acknowledge 'busy'. This is done according the **unique** IP source address and IP destination address in the data packet headers.

An embodiment of the invention is to use the network layer for streaming. Here the RTP (Real-time transport protocol) and RTSP (Real-time streaming protocol) are used together with UDP/IP. Here the stream is controlled with RTSP in a real-time uncritical way and the data packets are streamed with RTP in a real-time critical way. Respectively the UDP/IP layers and the RTP layer have to be hardware accelerated, RTSP can be supported by software processing. For this purpose in addition the filter decisions: 3.) 4.) and 5.) are used to determine the data packets that are to be processed in hardware for real-time behavior by their **unique** entry in the 'Protocol'-field, source port number of TCP/UDP packets, destination port number of TCP/UDP packets.

All other data packets are real-time uncritical and can be processed by software.

In the embodiment of the invention where a file system is used to control data access in the network, the file system has a number of procedures implemented for executing different tasks. In this case it is advantageous that a network station contains a procedure filter for separating real-time-critical procedure calls from real-time-uncritical procedure calls for passing the procedure calls either to the hardware means respectively software means.

For this purpose additionally the filter decision 6.) is to be used to determine the real-time critical data packets according to their procedures 'READ' and 'WRITE' and process them by hardware. All other data packets according procedures e.g. 'create_file' can be processed in a real-time uncritical way by software.

In comparison to currently known solutions that are relying on software, this embodiment guarantees the needed data throughput rate for accessing e.g. storage devices by distinguishing real-time-critical procedures from real-time-uncritical procedures.

Time-critical data streams to or from a storage device e.g. over a network are with this invention able to act with throughput speeds of 2Gbit/s or above accelerated by a hardware implemented data path.

The invention is in particular useful if the existing Network File System NFS is implemented.

### Brief Description of the Drawings

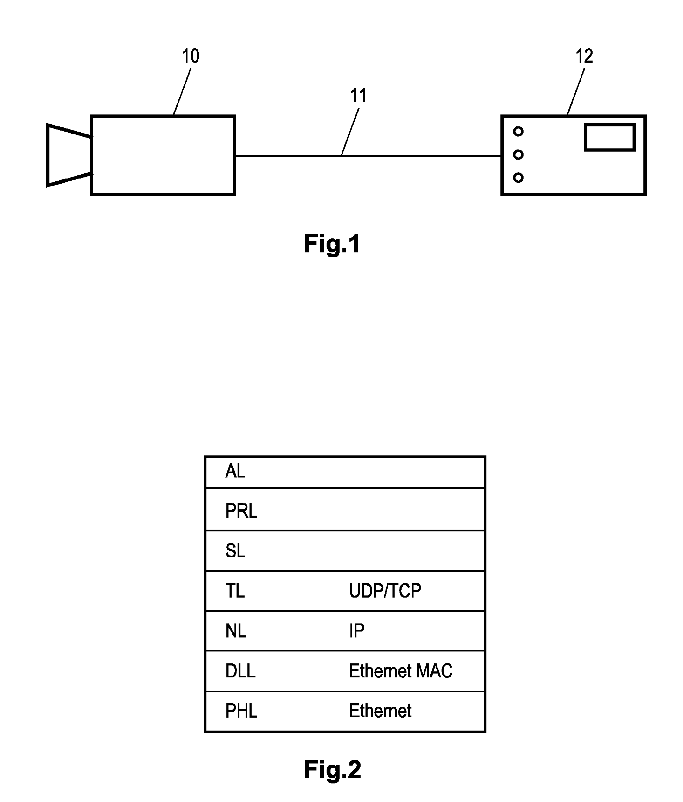

Exemplary embodiments of the invention will be explained in more detail with reference to the drawings, which show in Fig.1 a video camera connected to a real-time storage device;
Fig.2 the different layers of the OSI/ISO reference model of data communication;
Fig.3a the packet format of an Ethernet data packet including IP-, UDP- and RTP-header;
Fig.3b the packet format of an Ethernet data packet including IP-, UDP- and RPC-header;
Fig.4 the software/hardware block diagram of a device according to the invention;
Fig.5 a hardware/software implementation for a real-time high speed streaming interface for 10G Ethernet according to the invention
Fig.6 the structure of a procedure filter according RPC protocol

### Exemplary embodiments

In Fig.1 reference number 10 denotes a professional video camera. This camera is connected with a storage device 12 via an Ethernet bus connection 13. As uncompressed video streaming shall be performed via the bus connection, one of the Ethernet variants 1000BASE-xy or 10GBASE-xy shall be used. Those Ethernet variants include bus technology based on optical fibre or copper cable. The storage device is capable of recording audio/video data at 2 Gbit per second and above.

Fig. 2 shows the well-known OSI/ISO reference model of data communication. For the different layers it is marked which concrete technology has been used in this example. The physical layer PHL is an Ethernet physical layer. The data link layer is the Ethernet MAC layer. The Internet Protocol IP is used for implementing the network layer NL. On the level of the transport layer the UDP/TCP protocol is implemented. The higher layers session layer SL and presentation layer PRL are unspecified in this example. The application layer AL is represented by the RTP, RTSP and the remote procedure calls (RPC) for the network file system (NFS) .

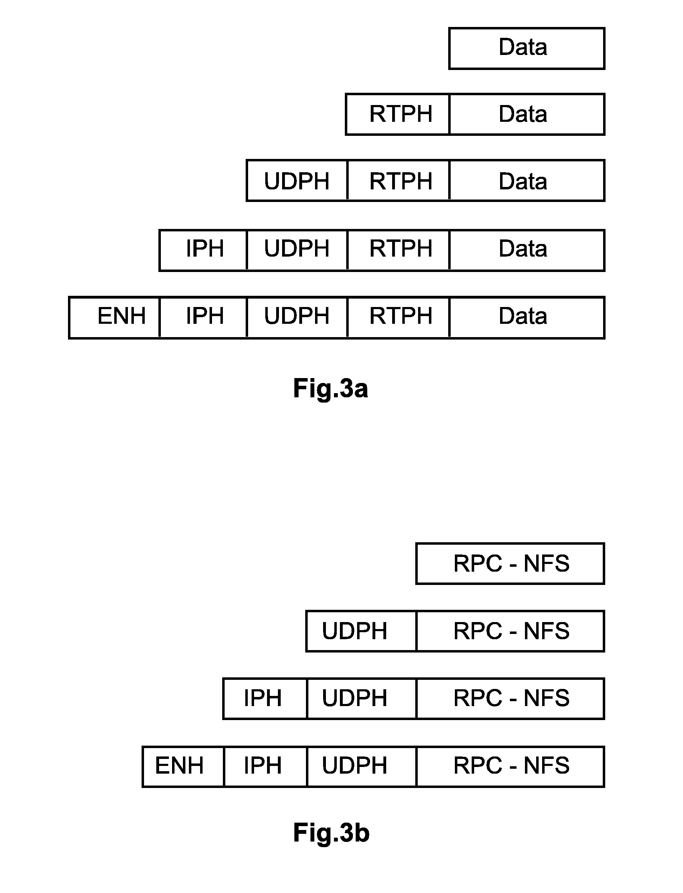

Fig. 3a shows the format of an Ethernet packet transporting a part of a video stream. The pure payload data including video data is depicted on top of the drawing. The second highest level shows the payload data of the highest level plus an RTP header. The third level shows payload data, RTP header plus an UDP header in front of the RTP header. The second level shows the extension of the packet in the third level with an IP header in front of the UDP header. At the bottom of Fig. 3 the complete Ethernet packet is shown with the Ethernet header upfront and the IP-, UDP-, RTP-header and payload data in the data field of the Ethernet packet.

Fig. 3b shows the corresponding format of an Ethernet packet for the embodiment that the RTP layer is exchanged with the RPC calls for the NFS.

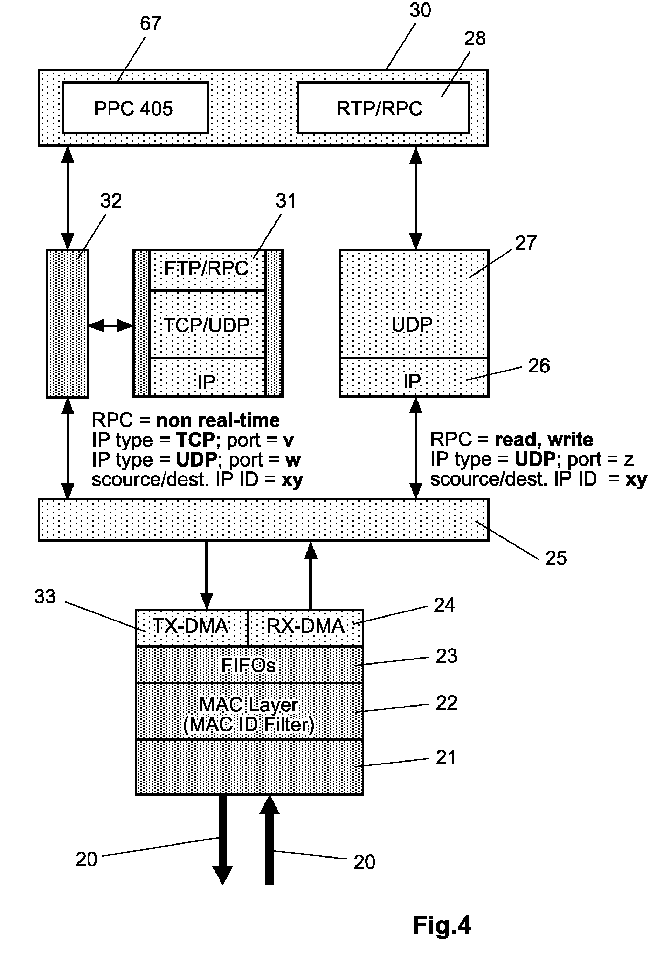

Fig. 4 shows a soft and hardware architectural block diagram for a device according to the invention. All real-time critical and uncritical Ethernet data packets are arriving to the device on e.g. 10Gbit Ethernet medium 20. Reference number 21 denotes the Ethernet physical layer. After this layer implemented in hardware the packets enter the Ethernet MAC hardware layer. Here the MAC identification number filtering for this device is done. Above the Ethernet MAC hardware layer 22 a number of FIFO memories 23 is positioned to decouple the device from the Ethernet bus 20 in terms of time. Receive RX- and Transmit TX-DMA machines 24 and 33 are reading respectively filling the FIFO memories 23 towards the upper protocol layers.

Unit 25 is for the receiving path an IP-header-, and upper layer header filter and a data packet demultiplexer and in case of the transmitting path a data packet multiplexer. Here, it is filtered for the real-time critical data packets with predetermined specific source/destination IP address ID = xy on the specific ports and for file system networking with a specific remote procedure call. All needed information for filtering can be found in the packet headers. This unit therefore needs to evaluate the different headers in the packet. The IP ID is present in the IP header as shown in Fig. 3 and the UDP port will be found in the UDP header as shown in Fig 3. The identified real time critical UDP packets are handed out to the hardware based IP decoding unit 26. Next processing stages is the hardware based UDP processing unit 27. Above the UDP layer the application layer 30 is positioned Part of this layer is implemented with dedicated hardware means. It is a hardware for the RTP protocol. For the case that the real-time streaming is made with NFS remote procedure calls, the hardware 28 supports the RPC format. In this case filter unit 25 is sensitive to the program number and procedure number in the UDP packet.

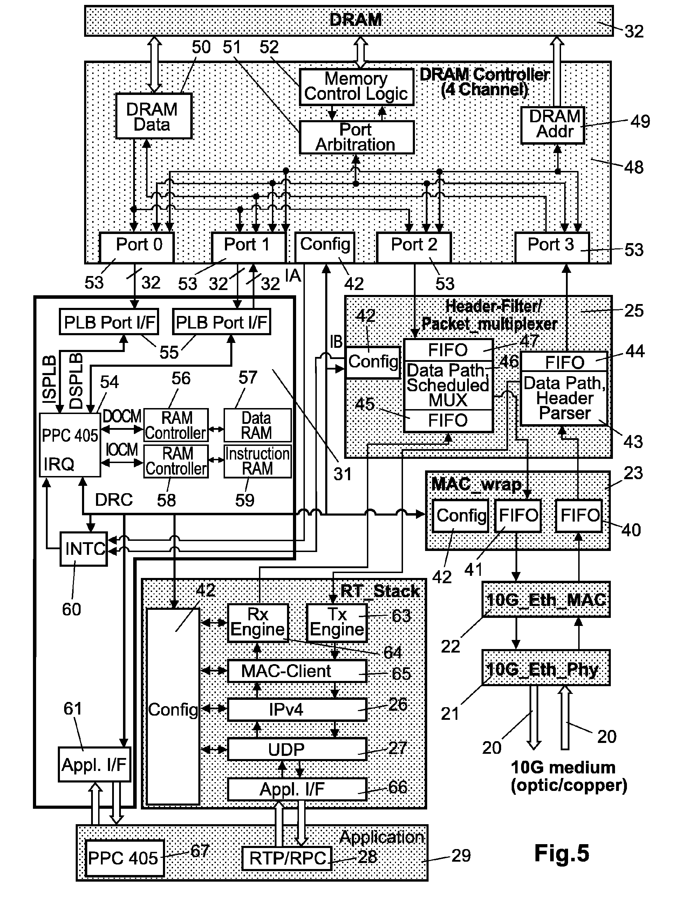

Unit 25 filters the time uncritical packets for a TCP or UDP port with the according source/destination IP IDs (in Fig.5 = xy). The packets are temporally stored in a RAM 32 to be processed by an embedded processor 31. Here a software implements the TCP/(UDP)/IP protocol layers. Processing time is much slower than on the data path of the real-time critical packets described before. After processing the packets, if needed, they can be multiplexed in an application packet multiplexer (not shown) with the time critical packet stream and provided to the application layer 30. The target application is finally executing the merged stream of fast arriving real-time critical as well as real time uncritical packets.

Next, the processing path in the other direction, i.e. in the direction of transmitting data from the device shown in Fig. 5 is described. If a connected device e.g. playback device (not shown) requests real-time critical data via UDP with the dedicated source IP ID of the subject device, the embedded processor 31 sends a request to the application 30 for the wanted data. The data is provided from the application 30 to an application packet demultiplexer not shown. This unit passes the data directly to the hardware RTP/RPC, UDP and IP units 28, 27, 26. These units format the data according to the RTP respectively RPC, UDP and IP packet standards. The packets are then provided to the packet multiplexer 25 and the multiplexed stream of data packets is then delivered to the hardware TX-DMA unit 33. Next processing units are the FIFO memories 23, the Ethernet hardware MAC layer 22, the Ethernet physical layer 21 and finally the Ethernet cable 20.

Next, the processing path with the same direction but for real-time uncritical packets is described. If a connected device (e.g. a Windows/Linux PC) requests data packets via e.g. FTP resp. TCP from the subject device, the FTP/TCP packet request is received by the embedded processor 31 as described above. The embedded processor interprets the FTP command and requests the application 30 for the wanted data. The data is provided from the application 30 to the application packet demultiplexer. This unit writes the data into the RAM 32. The embedded processor 31 builds a TCP/IP packet from the data and requests the header filter and data packet multiplexer unit 25 to send the data packets to the TX-DMA unit 33. Next processing units are the FIFO memory 23, the Ethernet MAC layer hardware unit 22, the Ethernet physical layer 21 and finally the Ethernet cable 20.

Fig.5 shows a more detailed block diagram of an embodiment of the invention. The same reference numbers are used for the same components as in Fig. 4. These components will not be explained again.

The receiving and transmitting path will be explained separately. For the receiving path the fast arriving data packets are collected in FIFO memory 40 of the FIFO memory unit 23 for time decoupling purposes. There is a configuration block 42 in the different hardware modules and so it is in the FIFO memory block. RX data packets are processed in the header parser block 43 of the filter block 25 according the filter algorithm mentioned above. The real-time critical packets are provided directly to the TX engine 63 in the hardware block 62 for the real time protocol stack. The real-time uncritical packets are written into a FIFO 44 that decouples system timing from DRAM timing. The packets out of the FIFO 44 are provided through the four channel DRAM controller 48 to the DRAM 32. Here, these data packets can be processed with the microcontroller 31, which may be based on the processor core PPC405. This processor is connected with the four channel DRAM controller 48 via its interface ports 55. The TX engine 63 is providing the real-time critical data packets to the hardware processing modules MAC client 65, IP 26 and UDP 27 for the real time protocol stack 62. Within these modules the packet evaluation is done in accordance to the respective standard. The application interface 66 provides the real-time critical data packets to the application module 29, where the RTP or RPC processing is done in a specific real-time hardware module 28. All real-time uncritical topics that are issued by received Ethernet data packets are handled between the microcontroller 31 who is in charge of processing the real-time uncritical Ethernet packets in the DRAM 24 and the microprocessor core 67 of the application processing through the application interface 61.

For transmitting purposes, the microprocessor core 67 of the application 29 is issuing a send request to the microcontroller 31 who configures all necessary modules for transmitting purpose. Thereafter the application 29 provides real-time critical data packets through the RTP/RPC module 28 and through the application interface 61 to the UDP 27, IP 26 and MAC-Client 65 hardware modules for formatting the data packets according the respective standard in real-time, respectively 'on-the-fly'. The RX-engine 64 is providing these data packets via a FIFO 45 to the scheduled data path multiplexer 46. Here, the real-time critical data packets are mixed with the real-time uncritical data packets that were provided by the microcontroller 31 in the DRAM 32, where these packets are fetched by the DRAM controller 48 and are provided to the FIFO 47. Afterwards all data packets are written into the TX-FIFO 41 for time decoupling purpose and send out to the optical respectively copper medium 20 via the Ethernet MAC 22 and the Ethernet physical layer module 21.

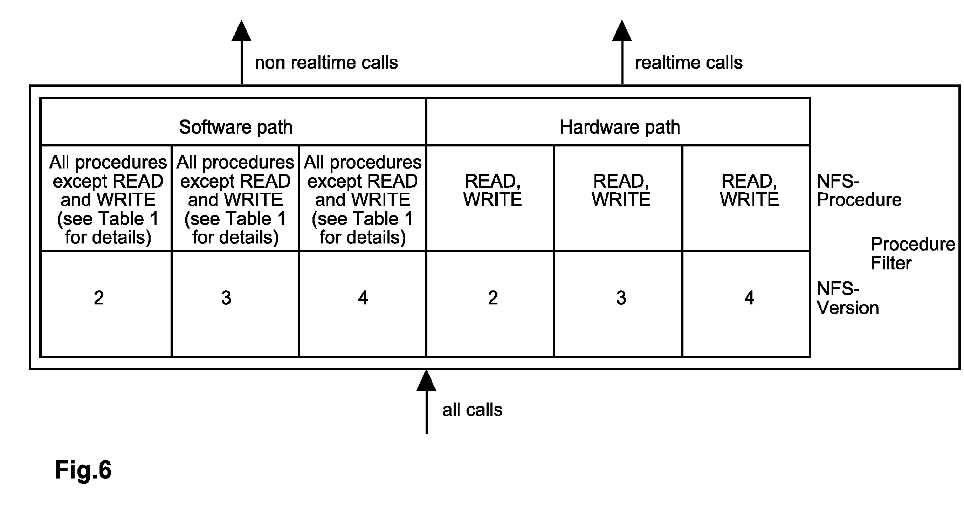

With respect to the RPC topic mentioned earlier, an additional embodiment of the invention is described with reference to Fig.6.

Data processing architectures like the one shown in Fig. 4 are architectures for real time data processing like Audio/Video (AV) systems. For all applications in these domains a fast access on storage devices is a key issue. While applications in the PC domain are interested in having fast data access, they also have a high priority in data security (data redundancy) regarding storage devices. So the controlling of data access in the PC domain is currently still not real-time capable and realized in software.

With the new applications in the AV real time domain demanding a sustained data throughput rate of 2 Gbit/s, it is not possible anymore to support this high data throughput (with an intelligent file system (FS) control) by software.

For managing data access to files in a network a file system exists called NFS (Network File System). NFS is a UNIX-based pseudo file system for use in a network on top of RPC-, UDP- , and IP-layer stack, where NFS is a set of the remote procedure calls RPC. In this embodiment of the invention it is kernel to introduce a mechanism that splits the procedures of the NFS layer into software-supported tasks and hardware implemented tasks.

The software part manages the NFS control procedures with 'non-real-time' behaviour like GETATTR, CREATE or REMOVE [see Table 1Table 1] except the NFS procedures READ and WRITE.

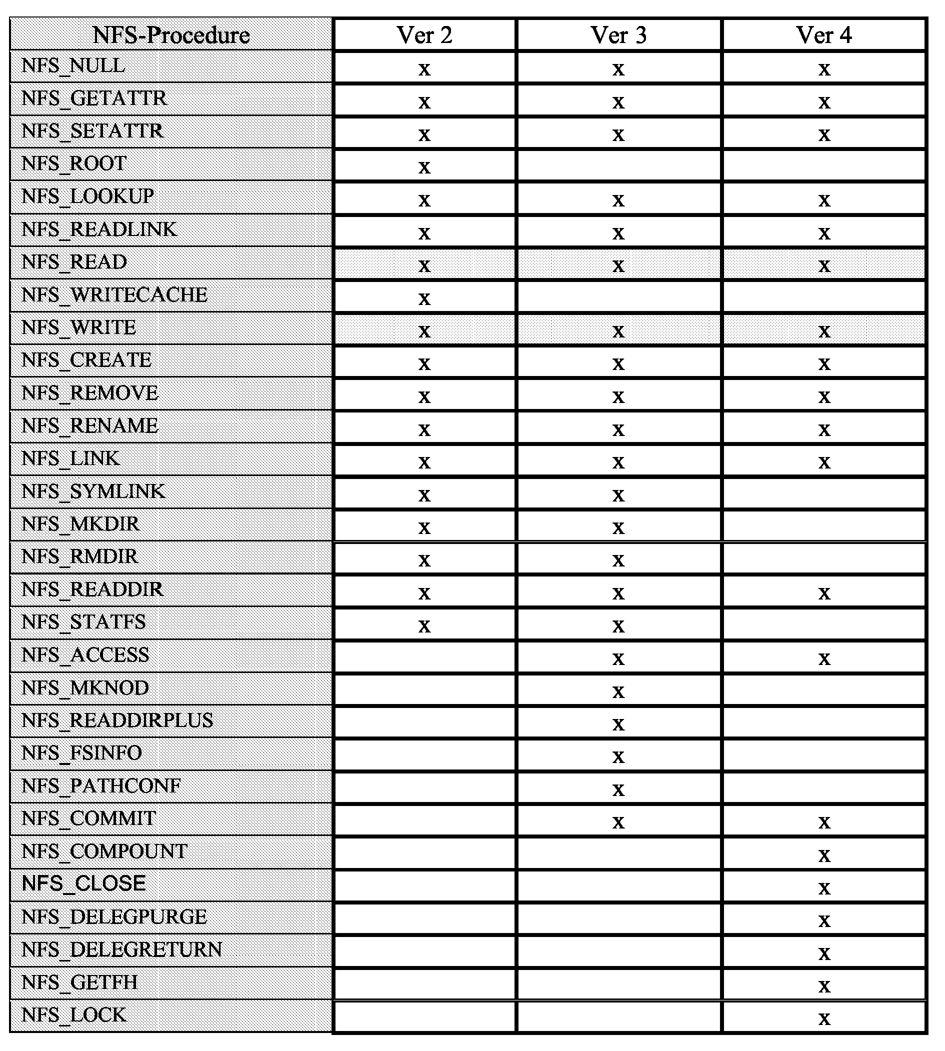

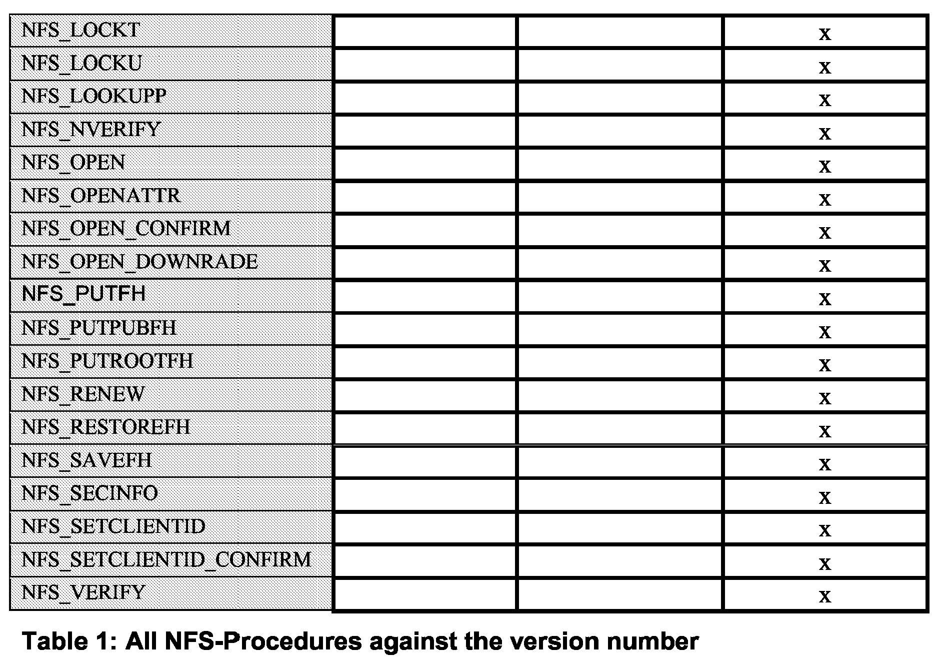

Fig. 6 shows the structure of filter unit 25 in Fig. 5 in case of RPC filtering. For this the filter unit 25 contains two tables, one for the software path and one for the hardware path. These tables include the procedure names that shall be passed through. The NFS version number indexes the tables. Only 2 procedures are passed through in the hardware part of the NFS layer: READ and WRITE (the real-time-critical data stream based procedures). The other ones are forwarded to the software path of the NFS layer.

In comparison to currently known solutions that are relying solely on software, the proposed invention guarantees a needed (high) data throughput rate for accessing e.g. storage devices by distinguishing real-time-critical NFS procedures from real-time-uncritical procedures.

Time-critical data streams to or from a NFS storage device e.g. over a network are with this invention able to act with throughput speeds of 2Gbit/s or above accelerated by a hardware implemented data path.

Various modifications of the described embodiments are possible and fall under the scope of the below listed claims.

## Claims

1. Method for performing data transport over a serial bus (20) using Internet protocols, wherein the data transport includes real-time critical as well as real-time uncritical data packets, **characterised in that** the real-time critical data packets are transferred based on user datagram protocol UDP and one of real-time transport protocol RTP or a procedure call from a file system and the real-time uncritical data packets are transferred based on transmission control protocol TCP and/or user datagram protocol UDP.

2. Apparatus for use in the method according to claim 1, comprising an interface for a serial bus (20), **characterised in that** the apparatus comprises hardware means (26, 27, 28) for processing the real-time critical data packets, software means for processing the real-time uncritical data packets as well as a filter unit (25) for passing the real-time critical data packets to the hardware means (26, 27, 28) and the real-time uncritical data packets to the software means.

3. Apparatus according to claim 2, wherein the filter unit (25) comprises means for filtering the data packets based on the IP address of the source or destination device, the IP packet type and the port number of a data packet.

4. Apparatus according to claim 3, wherein the means for filtering include a procedure filter to perform the filtering in addition based on the type of a procedure call in case the data packets are transferred based on user datagram protocol UDP and a procedure call from the file system.

5. Apparatus according to claim 4, wherein the procedure filter (42) contains a table of procedure calls to be passed to the hardware means (43) and a table of procedure calls to be passed to the software means (41).

6. Apparatus according to claim 4, wherein the file system is the network file system NFS and the procedure call is a remote procedure call.

7. Apparatus according to claim 5 or 6, wherein the only remote procedure calls to be passed to the hardware means (26, 27, 28) are the procedure calls NFS_READ and NFS_WRITE.
